# EUROPEAN PATENT APPLICATION

(11) **EP 4 283 716 A1**
(43) Date of publication of application: **29.11.2023**
(21) Application number: 22763646.1
(22) Date of filing: 04.03.2022
(51) Int. Cl.: H01M 4/36, H01M 4/525, H01M 4/505, H01M 4/62, H01M 10/052, C01G 53/00, C01G 23/00, H01M 4/02

(54) **CATHODE ACTIVE MATERIAL, PREPARATION METHOD THEREFOR, AND CATHODE AND LITHIUM SECONDARY BATTERY EACH COMPRISING SAME**

(30) Priority: 05.03.2021 KR 20210029597
(71) Applicant: Lg Chem, Ltd., Seoul 07336 (KR)
(72) Inventor: KIM, Won Tae, Daejeon 34122 (KR); LEE, June Woo, Daejeon 34122 (KR); HA, Seoung Chul, Daejeon 34122 (KR); LIM, Young Geun, Daejeon 34122 (KR); JUNG, Da Seal, Daejeon 34122 (KR); CHOI, So Jeong, Daejeon 34122 (KR)
(74) Representative: Hoffmann Eitle
(86) International application number: PCT/KR2022/003130
(87) International publication number: WO 2022/186665

(57) **Abstract**

The present invention relates to a positive electrode active material including a lithium composite transition metal oxide containing 70 atm% or more of nickel among total metallic elements excluding lithium, and a coating layer which is formed on a surface of the lithium composite transition metal oxide and includes titanium (Ti) and boron (B), wherein the Ti is included in an amount of 300 ppm to 800 ppm and the B is included in an amount of 500 ppm to 1,000 ppm based on a total weight of the positive electrode active material, and a method of preparing the same.

## Description

### TECHNICAL FIELD

This application claims priority from Korean Patent Application No. 10-2021-0029597, filed on March 5, 2021, the disclosure of which is incorporated by reference herein.

The present invention relates to a positive electrode active material, a method of preparing the same, and a positive electrode and a lithium secondary battery which include the positive electrode active material, and more particularly, to a positive electrode active material having improved roomtemperature and low-temperature output characteristics, a method of preparing the same, and a positive electrode and a lithium secondary battery which include the positive electrode active material.

### BACKGROUND ART

Demand for secondary batteries as an energy source has been significantly increased as technology development and demand with respect to mobile devices and electric vehicles have recently increased. Among these secondary batteries, lithium secondary batteries having high energy density, high voltage, long cycle life, and low self-discharging rate have been commercialized and widely used.

Lithium transition metal oxides, such as lithium cobalt oxide such as LiCoO₂, lithium nickel oxide such as LiNiO₂, lithium manganese oxide such as LiMnO₂ or LiMn₂O₄, or lithium iron phosphate such as LiFePO₄, have been developed as a positive electrode active material of the lithium secondary battery, and, recently, lithium composite transition metal oxides including two or more types of transition metals, for example, Li[NiₚCo_{q}Mnᵣ]O₂, Li[NiₚCo_{q}Alᵣ]O₂, and Li[NiₚCo_{q}MnᵣAlₛ]O₂ (where 0<p<1, 0<q<1, 0<r<1, and 0<s<1), have been developed and widely used.

Recently, as demand for high-capacity batteries used in electric vehicles has increased, development of a high-nickel (high-Ni)-based positive electrode active material, in which capacity characteristics are improved by increasing a nickel content in the lithium composite transition metal oxide to 70 atm% or more, has been actively conducted.

The high-nickel-based positive electrode active material has an advantage of having excellent capacity characteristics, but, since it has low structural stability, a crystal lattice structure degrades rapidly as charge and discharge proceed, and thus, it has a problem in that life characteristics are poor. Accordingly, a method of improving the structural stability of the high-nickel-based positive electrode active material by suppressing a contact with an electrolyte solution by forming a coating layer on a surface of the positive electrode active material using boron (B) is being used. However, with respect to the high-nickel-based positive electrode active material having the boron coating layer formed thereon, the structural stability is improved, but, since output characteristics are degraded due to an increase in resistance and, particularly, the output characteristics are degraded due to the increase in resistance at a low state of charge and a low temperature, there is a problem in that it is not suitable as a material for an electric vehicle which is required to maintain sufficient output even at the low state of charge and low-temperature state.

Thus, there is a need to develop a high-nickel-based positive electrode active material which may maintain sufficient output even at the low state of charge and low-temperature state while having excellent structural stability.

### DISCLOSURE OF THE INVENTION

### TECHNICAL PROBLEM

An aspect of the present invention provides a positive electrode active material having improved output characteristics at a low state of charge (SOC) and a low temperature and a method of preparing the same.

Another aspect of the present invention provides a positive electrode including the positive electrode active material and a lithium secondary battery including the positive electrode.

### TECHNICAL SOLUTION

According to an aspect of the present invention, there is provided a positive electrode active material including a lithium composite transition metal oxide containing 70 atm% or more of nickel among total metallic elements excluding lithium; and a coating layer which is formed on a surface of the lithium composite transition metal oxide and includes titanium (Ti) and boron (B), wherein the Ti is included in an amount of 300 ppm to 800 ppm and the B is included in an amount of 500 ppm to 1,000 ppm based on a total weight of the positive electrode active material.

According to another aspect of the present invention, there is provided a method of preparing the above-described positive electrode active material which includes performing a heat treatment after dry mixing a lithium composite transition metal oxide containing 70 atm% or more of nickel among total metallic elements excluding lithium, a Ti-containing raw material, and a B-containing raw material.

According to another aspect of the present invention, there is provided a positive electrode including the positive electrode active material according to the present invention and a lithium secondary battery including the positive electrode.

### ADVANTAGEOUS EFFECTS

A positive electrode active material according to the present invention including titanium (Ti) and boron (B) in a specific amount may maintain excellent output characteristics at a low state of charge (SOC) and a low temperature. Thus, it may be suitably used in a secondary battery for an electric vehicle which requires high output characteristics at the low state of charge and low temperature.

Also, since a method of preparing a positive electrode active material according to the present invention forms a coating layer by a dry coating method, it is advantageous in that a process is simple because additional processes, such as filtration and drying, are not required and there are few restrictions on coating raw materials because it is not necessary to consider solubility in an organic solvent.

Furthermore, in the method of preparing a positive electrode active material according to the present invention, the coating layer may be formed at a low heat treatment temperature of 300°C to 500°C by using a Ti-containing raw material and a B-containing raw material together during the formation of the coating layer. Accordingly, deformation of a crystal structure of a lithium composite transition metal oxide due to a high-temperature heat treatment may be prevented.

Also, according to the method of preparing a positive electrode active material according to the present invention, since Ti and B penetrate into secondary particles during the formation of the coating layer, coating is made not only on a surface of the lithium composite transition metal oxide but also inside of the lithium composite transition metal oxide, and thus, stability of the positive electrode active material is further improved.

### BRIEF DESCRIPTION OF THE DRAWINGS

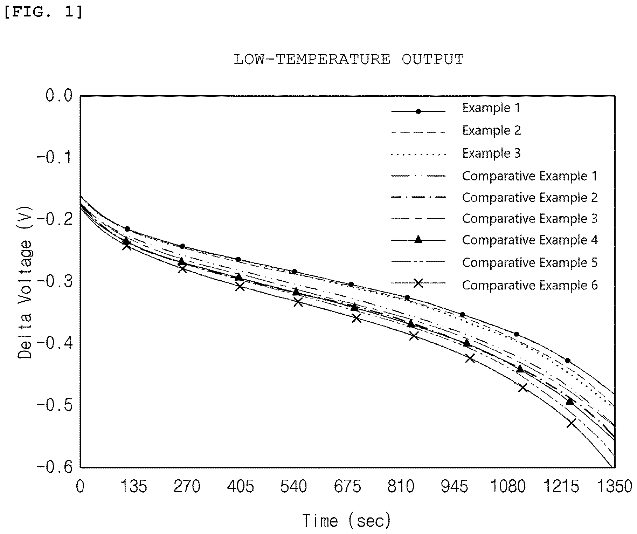

FIG. 1 is a graph illustrating amounts of change in voltage during low-temperature exposure of lithium secondary batteries in which positive electrode active materials prepared by Examples and Comparative Examples are used.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present invention will be described in detail.

### Positive Electrode Active Material

First, a positive electrode active material according to the present invention will be described.

The positive electrode active material according to the present invention includes a lithium composite transition metal oxide, and a coating layer which is formed on a surface of the lithium composite transition metal oxide and includes titanium (Ti) and boron (B).

The lithium composite transition metal oxide may be a lithium composite transition metal oxide containing nickel, and, specifically, may be a lithium composite transition metal oxide containing 70 atm% or more of nickel among total metallic elements excluding lithium. In a case in which a nickel content in the lithium composite transition metal oxide is 70 atm% or more, since the lithium composite transition metal oxide exhibits high capacity, it may be suitably used in a high-capacity battery which is used in an electric vehicle.

Specifically, the lithium composite transition metal oxide may be represented by [Formula 1] below.

[Formula 1] Liₐ[NiₓCo_{y}M¹_{z}M²_{w}]O₂

In Formula 1, M¹ is manganese (Mn), aluminum (Al), or a combination thereof, and may preferably be Mn or a combination of Mn and Al.

M² may be at least one selected from the group consisting of tungsten (W), molybdenum (Mo), chromium (Cr), zirconium (Zr), titanium (Ti), magnesium (Mg), tantalum (Ta), niobium (Nb), aluminum (Al), cerium (Ce), hafnium (Hf), lanthanum (La), strontium (Sr), and barium (Ba).

a represents a molar ratio of lithium to transition metals, wherein a may satisfy 0.8≤a≤1.2, preferably 0.9≤a≤1.1, and more preferably 1.0≤a≤1.1. When a satisfies the above range, a layered crystal structure of the lithium composite transition metal oxide may be well developed.

x represents a molar ratio of nickel among metallic elements excluding lithium, wherein x may satisfy 0.7≤x<1, 0.7≤x≤0.99, or 0.7≤x≤0.98. When x satisfies the above range, excellent capacity characteristics may be achieved.

y represents a molar ratio of cobalt among the metallic elements excluding lithium, wherein y may satisfy 0<y<0.3, 0.01<y<0.3, or 0.01<y≤0.2.

z represents a molar ratio of M¹ element among the metallic elements excluding lithium, wherein z may satisfy 0<z<0.3, 0.01<z<0.3, or 0.01<z≤0.2.

w represents a molar ratio of doping element M² doped in a transition metal layer of the lithium composite transition metal oxide, wherein w may satisfy 0≤w≤0.02 or 0≤w≤0.01.

A high-nickel-based lithium composite transition metal oxide containing nickel in a high concentration, like the lithium composite transition metal oxide, has an advantage of having excellent capacity characteristics, but deintercalation of oxygen due to oxidation from Ni²⁺ to Ni³⁺ or Ni⁴⁺ occurs rapidly depending on a state of charge. The deintercalated oxygen destabilizes a crystal lattice of the lithium composite transition metal oxide and further causes collapse of the crystal lattice. Also, a reaction with an electrolyte solution decomposed on a surface of the high-nickel-based lithium composite transition metal oxide occurs to increase gas generation and resistance. Accordingly, the high-nickel-based lithium composite transition metal oxide has a problem in that structural stability is poor. In order to solve this problem, conventionally, a method of improving the structural stability by minimizing a contact with the electrolyte solution by forming a boron coating layer on the surface of the lithium composite transition metal oxide has been used. However, in a case in which the boron coating layer is formed on the surface of the lithium composite transition metal oxide, the structural stability is improved, but output characteristics are degraded due to an increase in resistance, and there is a problem in that the output characteristics are degraded due to the increase in resistance particularly at a low state of charge and a low temperature.

As a result of a significant amount of research conducted into solving the problem as described above, the present inventors have found that the degradation of the output characteristics at the low state of charge and low temperature may be minimized while improving the structural stability of the positive electrode active material by forming a coating layer including Ti and B at the same time on the surface of the lithium composite transition metal oxide, but by including Ti and B in a specific amount.

Specifically, the positive electrode active material according to the present invention includes a coating layer which is formed on the surface of the lithium composite transition metal oxide and includes Ti and B, wherein the Ti is included in an amount of 300 ppm to 800 ppm, for example, 400 ppm to 700 ppm, and the B is included in an amount of 500 ppm to 1,000 ppm, for example, 600 ppm to 900 ppm based on a total weight of the positive electrode active material. In a case in which the amounts of the Ti and B are outside the above ranges, an effect of improving the output characteristics at the low state of charge and low temperature is insignificant. Specifically, in a case in which the amount of the Ti is less than 300 ppm, the effect of improving the output characteristics hardly occurs, and, in a case in which the amount of the Ti is greater than 800 ppm, discharge capacity may be reduced and gas generation may be increased. Also, in a case in which the amount of the B is less than 500 ppm, discharge capacity characteristics may be degraded, and, in a case in which the amount of the B is greater than 1,000 ppm, resistance may be increased.

In the present invention, since the B and Ti are added together during the formation of the coating layer, a melting point of a Ti-containing raw material is reduced so that the coating layer may be formed by a dry coating method. Since the Ti-containing raw material, such as TiO₂, has a high melting point, a heat treatment at a high temperature of 700°C or higher is required when the coating layer is formed by the dry coating method using this raw material. However, if the heat treatment is performed at a high temperature of 700°C or higher during the formation of the coating layer, there is a problem in that the crystal structure of the lithium composite transition metal oxide may be deformed. Accordingly, typically, it was difficult to form a coating layer including Ti by using the dry coating method, and a method of wet coating after dissolving a Ti raw material in a solvent was mainly used. However, in a case in which the wet coating method is used, since a separate process for removing the solvent is required, the process is inconvenience, and there has been a problem in that surface characteristics or performance of the lithium composite transition metal oxide may be degraded by the solvent used in the coating process.

However, in a case in which the coating layer is formed by mixing a Ti-containing raw material and a B-containing raw material together as in the present invention, since the melting point of the Ti-containing raw material is reduced while a liquefaction phenomenon occurs at an interface of the Ti-containing raw material by the B-containing raw material, the coating layer may be smoothly formed even if the heat treatment is performed at a low temperature of about 300°C to about 500°C.

The lithium composite transition metal oxide used in the present invention may be in the form of a secondary particle in which primary particles are aggregated, wherein the coating raw materials move from a surface of the secondary particle of the lithium composite transition metal oxide to an interface between the primary particles having a low surface energy due to the liquefaction phenomenon, and diffuse into the secondary particle along the interface between the primary particles during the heat treatment. Accordingly, in the positive electrode active material according to the present invention, Ti and B, as the coating raw materials, are distributed not only on the surface of the secondary particle of the lithium composite transition metal oxide but also inside of the secondary particle. In a case in which Ti and B are distributed on the surface and inside of the secondary particle as described above, an effect of further improving the structural stability of the positive electrode active material may be obtained because even the interface between the primary particles in the particle is coated.

### Method of Preparing Positive Electrode Active Material

Next, a method of preparing a positive electrode active material according to the present invention will be described.

The method of preparing a positive electrode active material according to the present invention includes the step of: performing a heat treatment after dry mixing a lithium composite transition metal oxide containing 70 atm% or more of nickel among total metallic elements excluding lithium, a Ti-containing raw material, and a B-containing raw material.

In a case in which an amount of the nickel in the lithium composite transition metal oxide is 70 atm% or more, since the lithium composite transition metal oxide exhibits high capacity, it may be suitably used in a high-capacity battery which is used in an electric vehicle.

Specifically, the lithium composite transition metal oxide may be represented by [Formula 1] below.

[Formula 1] Liₐ[NiₓCo_{y}M¹_{z}M²_{w}]O₂

In Formula 1, M¹ is Mn, Al, or a combination thereof, and may preferably be Mn or a combination of Mn and Al.

M² may be at least one selected from the group consisting of W, Mo, Cr, Zr, Ti, Mg, Ta, Nb, Al, Ce, Hf, La, Sr, and Ba.

a represents a molar ratio of lithium to transition metals, wherein a may satisfy 0.8≤a≤1.2, preferably 0.9≤a≤1.1, and more preferably 1.0≤a≤1.1. When a satisfies the above range, a layered crystal structure of the lithium composite transition metal oxide may be well developed.

x represents a molar ratio of nickel among metallic elements excluding lithium, wherein x may satisfy 0.7≤x<1, 0.7≤x≤0.99, or 0.7≤x≤0.98. When x satisfies the above range, excellent capacity characteristics may be achieved.

y represents a molar ratio of cobalt among the metallic elements excluding lithium, wherein y may satisfy 0<y<0.3, 0.01<y<0.3, or 0.01<y≤0.2.

z represents a molar ratio of M¹ element among the metallic elements excluding lithium, wherein z may satisfy 0<z<0.3, 0.01<z<0.3, or 0.01<z≤0.2.

w represents a molar ratio of doping element M² doped in a transition metal layer of the lithium composite transition metal oxide, wherein w may satisfy 0≤w≤0.02 or 0≤w≤0.01.

The Ti-containing raw material, for example, may be TiO₂, TiCl₄, TiN, or Cl₂H₂₈O₄Ti, and, among them, TiO₂, which is inexpensive and easy to handle due to non-toxicity, is particularly preferable.

The Ti-containing raw material may be mixed in an amount of 0.01 part by weight to 0.2 part by weight, preferably 0.05 part by weight to 0.15 part by weight, and more preferably 0.05 part by weight to 0.14 part by weight based on 100 parts by weight of the lithium composite transition metal oxide. In a case in which the mixing amount of the Ti-containing raw material satisfies the above range, the effect of improving the output characteristics at the low state of charge and low temperature is excellent, and a decrease in discharge capacity and increases in resistance and gas generation may be prevented.

The B-containing raw material, for example, may be H₃BO₃, HB₂O₃, C₆H₅B(OH)₂, (C₆H₅O)₃B, [CH₃(CH₂)₃O]₃B, Cl₃H₁₉BO₃, C₃H₉B₃O₆, or (C₃H₇O)₃B, and, among them, H₃BO₃, which may effectively reduce the melting point of TiO₂ and has an effect of improving charge/discharge capacity, is particularly preferable.

The B-containing raw material may be mixed in an amount of 0.1 part by weight to 1 part by weight, preferably 0.2 part by weight to 0.8 part by weight, and more preferably 0.3 part by weight to 0.6 part by weight based on 100 parts by weight of the lithium composite transition metal oxide. In a case in which the amount of the B-containing raw material satisfies the above range, the decrease in discharge capacity and the increase in resistance may be suppressed, and the output characteristics are excellent at the low state of charge and low temperature.

The lithium composite transition metal oxide, the Ti-containing raw material, and the B-containing raw material are mixed by a dry mixing method. In this case, the dry mixing may be performed through a mixer or the like. In a case in which the coating layer is formed by dry mixing the lithium composite transition metal oxide and the coating raw materials as in the present invention, since a process is not only simple because a solvent removal process is not required in comparison to a wet mixing process, but damage to the lithium composite transition metal oxide due to the solvent may also be minimized, the performance of the lithium composite transition metal oxide may be further improved.

When the lithium composite transition metal oxide, the Ti-containing raw material, and the B-containing raw material are mixed by the dry mixing, a coating layer is formed through a heat treatment. In this case, the heat treatment may be performed at a temperature of 300°C to 500°C, for example, 350°C to 450°C. In a case in which the heat treatment temperature is less than 300°C, the coating layer is not formed smoothly, and, in a case in which the heat treatment temperature is greater than 500°C, physical properties of the lithium composite transition metal oxide may be deteriorated.

Since the Ti-containing raw material, such as TiO₂, has a high melting point, a coating layer is not formed when the heat treatment is performed at a temperature of 300°C to 500°C in a case in which the coating layer is formed using the Ti-containing raw material alone. However, as in the present invention, in the case that the coating layer is formed by mixing the Ti-containing raw material and the B-containing raw material together, since the melting point of the Ti-containing raw material is reduced while the liquefaction phenomenon occurs at the interface of the Ti-containing raw material by the B-containing raw material, the coating layer may be smoothly formed even if the heat treatment is performed at a low temperature of about 300°C to about 500°C.

### Positive Electrode

Next, a positive electrode according to the present invention will be described.

The positive electrode according to the present invention includes the above-described positive electrode active material according to the present invention. Since the positive electrode active material has been described above, detailed descriptions thereof will be omitted, and the remaining configurations will be only described below.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

In this case, the positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector, or the positive electrode may be prepared by casting the positive electrode material mixture on a separate support and then laminating a film separated from the support on the positive electrode collector.

The solvent used in the preparation of the positive electrode material mixture may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have a viscosity that may provide excellent thickness uniformity during the subsequent coating for the preparation of the positive electrode.

### Lithium Secondary Battery

The above-described positive electrode according to the present invention may be suitably used in an electrochemical device. The electrochemical device, for example, may be a battery or a capacitor, and may more specifically be a lithium secondary battery.

The lithium secondary battery specifically may include a positive electrode, a negative electrode disposed to face the positive electrode, a separator disposed between the positive electrode and the negative electrode, and an electrolyte. In this case, the positive electrode is the above-described positive electrode according to the present invention. Since the positive electrode has been described above, detailed descriptions thereof will be omitted, and the remaining configurations will be only described in detail below.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

The negative electrode, for example, may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN (C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, an additive may be further included in the electrolyte.

The lithium secondary battery as described above may be suitably used in portable devices, such as mobile phones, notebook computers, and digital cameras, and electric vehicles, and is particularly useful as a battery for an electric vehicle.

### PREFERRED MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

After 100 g of Li[Ni_{0.7}Co_{0.1}Mn_{0.2}]O₂, 0.1 g of TiO₂, and 0.5 g of H₃BO₃ were put into a mixer (Acoustic mixer by Resodyn Corporation) and dry mixed, a heat treatment was performed at 370°C for 7 hours in an air atmosphere. Then, the heat-treated powder was ground using a mortar and then classified using a 325 mesh sieve to obtain positive electrode active material A.

Ti and B contents of the obtained positive electrode active material A were 600 ppm and 800 ppm, respectively. In this case, the Ti and B contents were analyzed by an ICP (Inductively Coupled Plasma) method.

### Example 2

Positive electrode active material B was obtained in the same manner as in Example 1 except that 100 g of Li[Ni_{0.7}Co_{0.1}Mn_{0.2}]O₂, 0.05 g of TiO₂, and 0.3 g of H₃BO₃ were put into a mixer and dry mixed.

Ti and B contents of the obtained positive electrode active material B were 300 ppm and 500 ppm, respectively.

### Example 3

Positive electrode active material C was obtained in the same manner as in Example 1 except that 100 g of Li[Ni_{0.7}Co_{0.1}Mn_{0.2}]O₂, 0.14 g of TiO₂, and 0.6 g of H₃BO₃ were put into a mixer and dry mixed.

Ti and B contents of the obtained positive electrode active material C were 800 ppm and 1,000 ppm, respectively.

### Comparative Example 1

Positive electrode active material D was obtained in the same manner as in Example 1 except that 100 g of Li[Ni_{0.7}C_{0.1}Mn_{0.2}]O₂ and 0.5 g of H₃BO₃ were put into a mixer and dry mixed.

A B content of the obtained positive electrode active material D was 800 ppm.

### Comparative Example 2

Positive electrode active material E was obtained in the same manner as in Example 1 except that 100 g of Li[Ni_{0.7}Co_{0.1}Mn_{0.2}]O₂ and 0.1 g of TiO₂ were put into a mixer and dry mixed.

A Ti content of the obtained positive electrode active material E was 600 ppm.

### Comparative Example 3

Positive electrode active material F was obtained in the same manner as in Example 1 except that 100 g of Li[Ni_{0.7}Co_{0.1}Mn_{0.2}]O₂, 0.03 g of TiO₂, and 0.5 g of H₃BO₃ were put into a mixer and dry mixed.

Ti and B contents of the obtained positive electrode active material F were 200 ppm and 800 ppm, respectively.

### Comparative Example 4

Positive electrode active material G was obtained in the same manner as in Example 1 except that 100 g of Li[Ni_{0.7}Co_{0.1}Mn_{0.2}]O₂, 0.17 g of TiO₂, and 0.5 g of H₃BO₃ were put into a mixer and dry mixed.

Ti and B contents of the obtained positive electrode active material G were 1,000 ppm and 800 ppm, respectively.

### Comparative Example 5

Positive electrode active material H was obtained in the same manner as in Example 1 except that 100 g of Li[Ni_{0.7}Co_{0.1}Mn_{0.2}]O₂, 0.1 g of TiO₂, and 0.24 g of H₃BO₃ were put into a mixer and dry mixed.

Ti and B contents of the obtained positive electrode active material H were 600 ppm and 400 ppm, respectively.

### Comparative Example 6

Positive electrode active material I was obtained in the same manner as in Example 1 except that 100 g of Li[Ni_{0.7}Co_{0.1}Mn_{0.2}]O₂, 0.1 g of TiO₂, and 0.66 g of H₃BO₃ were put into a mixer and dry mixed.

Ti and B contents of the obtained positive electrode active material I were 600 ppm and 1,100 ppm, respectively.

### Experimental Example

Each of the positive electrode active materials prepared by Examples 1 to 3 and Comparative Examples 1 to 6, a carbon black conductive agent, and a PVDF binder were mixed in a weight ratio of 96.5 : 1.5 : 2 in N-methyl-2-pyrrolidone (NMP) to prepare a positive electrode material mixture. An aluminum current collector was coated with the positive electrode material mixture, dried, and then roll-pressed to prepare a positive electrode.

A negative electrode active material (mixture in which natural graphite and artificial graphite were mixed in a weight ratio of 1:1), carbon black, and a binder (BML 302, Zeon Corporation) were mixed in a weight ratio of 96 : 1 : 3 in N-methyl-2-pyrrolidone (NMP) to prepare a negative electrode material mixture. A copper current collector was coated with the negative electrode material mixture, dried, and then roll-pressed to prepare a negative electrode.

An electrode assembly was prepared by disposing a polyethylene separator between the above-prepared positive electrode and negative electrode, and an electrolyte solution was injected to prepare each lithium secondary battery. As the electrolyte solution, a solution, in which 1 M LiPF₆ was dissolved in an organic solvent in which ethylene carbonate(EC) : ethyl methyl carbonate(EMC) : diethyl carbonate(DEC) were mixed in a volume ratio of 3 : 4 : 3, was used.

Low-temperature output characteristics and output characteristics at a state of charge (SOC) of 10% according to the SOC of the secondary battery prepared as described above were measured in the following manner.
(1) Output characteristics at an SOC of 10%: After charging the above-prepared secondary battery to an SOC of 10% at room temperature (25°C), 10-second resistance was measured while discharging the secondary battery. Measurement results are presented in [Table 1] below.
(2) Low-temperature output characteristics: After charging the above-prepared secondary battery to an SOC of 20% at room temperature (25°C), the charged secondary battery was discharged at 0.6 C to 3 V in a chamber at -25°C and an amount of change in voltage with time was then measured. Measurement results are presented in FIG. 1.

**[Table 1]**

| | 10-second resistance (Ω) | Resistance percentage (%) |
|---|---|---|
| Example 1 | 1.999 | 100.0 |
| Example 2 | 2.037 | 101.9 |
| Example 3 | 2.064 | 103.3 |
| Comparative Example 1 | 2.121 | 106.2 |
| Comparative Example 2 | 2.137 | 107.0 |
| Comparative Example 3 | 2.114 | 105.8 |
| Comparative Example 4 | 2.244 | 112.3 |
| Comparative Example 5 | 2.153 | 107.8 |
| Comparative Example 6 | 2.352 | 117.7 |

Referring to [Table 1], it may be understood that the lithium secondary batteries, in which the positive electrode active materials of Examples 1 to 3 containing Ti in an amount of 300 ppm to 800 ppm and B in an amount of 500 ppm to 1,000 ppm were used, exhibited lower resistance at a low state of charge (SOC) of 10% than the lithium secondary batteries in which the positive electrode active materials of Comparative Examples 1 to 6 were used and, accordingly, had higher output characteristics. Specifically, with respect to the lithium secondary batteries in which the positive electrode active materials of Examples 1 to 3 were used, resistances at an SOC of 10% were reduced by 3% to 16% in comparison to those of the lithium secondary batteries in which the positive electrode active materials of Comparative Examples 1 to 6 were used.

Also, referring to FIG. 1, with respect to the secondary batteries in which the positive electrode active materials of Examples 1 to 3 were used, it may be confirmed that amounts of change in voltage were smaller even during low-temperature exposure than those of the secondary batteries in which the positive electrode active materials of Comparative Examples 1 to 6 were used. That is, in a case in which the positive electrode active material containing Ti in an amount of 300 ppm to 800 ppm and B in an amount of 500 ppm to 1,000 ppm was used as in the present invention, the change in voltage (voltage drop) was small at a low temperature, and accordingly, since an increase in resistance was small, excellent output characteristics may be exhibited.

## Claims

1. A positive electrode active material comprising a lithium composite transition metal oxide containing 70 atm% or more of nickel among total metallic elements excluding lithium; and
a coating layer which is formed on a surface of the lithium composite transition metal oxide and includes titanium (Ti) and boron (B),
wherein the Ti is included in an amount of 300 ppm to 800 ppm and the B is included in an amount of 500 ppm to 1,000 ppm based on a total weight of the positive electrode active material.

2. The positive electrode active material of claim 1, wherein the Ti is included in an amount of 400 ppm to 700 ppm and the B is included in an amount of 600 ppm to 900 ppm based on the total weight of the positive electrode active material.

3. The positive electrode active material of claim 1, wherein the lithium composite transition metal oxide is in a form of a secondary particle in which primary particles are aggregated, and
the Ti is distributed inside and on a surface of the secondary particle of the lithium composite transition metal oxide.

4. The positive electrode active material of claim 1, wherein the lithium composite transition metal oxide is represented by Formula 1.
[Formula 1] Liₐ[NiₓCo_{y}M¹_{z}M²_{w}]O₂
wherein, in Formula 1,
M¹ is manganese (Mn), aluminum (Al), or a combination thereof,
M² is at least one selected from the group consisting of tungsten (W), molybdenum (Mo), chromium (Cr), zirconium (Zr), titanium (Ti), magnesium (Mg), tantalum (Ta), and niobium (Nb), and
0.9≤a≤1.1, 0.7≤x<1, 0<y<0.3, 0<z<0.3, and 0≤w≤0.02.

5. A method of preparing the positive electrode active material of claim 1, the method comprising performing a heat treatment after dry mixing a lithium composite transition metal oxide containing 70 atm% or more of nickel among total metallic elements excluding lithium, a Ti-containing raw material, and a B-containing raw material.

6. The method of claim 5, wherein the Ti-containing raw material is TiO₂.

7. The method of claim 5, wherein the B-containing raw material is H₃BO₃.

8. The method of claim 5, wherein the Ti-containing raw material is mixed in an amount of 0.01 part by weight to 0.2 part by weight based on 100 parts by weight of the lithium composite transition metal oxide.

9. The method of claim 5, wherein the B-containing raw material is mixed in an amount of 0.1 part by weight to 1 part by weight based on 100 parts by weight of the lithium composite transition metal oxide.

10. The method of claim 5, wherein the heat treatment is performed at a temperature of 300°C to 500°C.

11. The method of claim 5, wherein the lithium composite transition metal oxide is represented by Formula 1.
[Formula 1] Liₐ[NiₓCo_{y}M¹_{z}M²_{w}]O₂
wherein, in Formula 1,
M¹ is manganese (Mn), aluminum (Al), or a combination thereof,
M² is at least one selected from the group consisting of tungsten (W), molybdenum (Mo), chromium (Cr), zirconium (Zr), titanium (Ti), magnesium (Mg), tantalum (Ta), and niobium (Nb), and
0.9<a≤1.1, 0.7≤x<1, 0<y<0.3, 0<z<0.3, and 0≤w≤0.02.

12. A positive electrode comprising the positive electrode active material of any one of claims 1 to 4.

13. A lithium secondary battery comprising the positive electrode of claim 12, a negative electrode, a separator disposed between the positive electrode and the negative electrode, and an electrolyte.
